# EUROPÄISCHE PATENTSCHRIFT

(11) **EP 1 918 138 B1**
(45) Veröffentlichungstag und Bekanntmachung des Hinweises auf die Patenterteilung: **20.05.2009**
(21) Anmeldenummer: 06023045.5
(22) Anmeldetag: 06.11.2006
(51) Int. Cl.: B60H 1/00

(54) **Gebläsemodul für einen Fahrzeugsitz und Kraftfahrzeugsitz mit Geräuschisolierung**
Blower for a vehicle seat and vehicle seat with sound insulation
Souffleur pour un siège de véhicule automobile et un siège de véhicule automobile avec isolation acoustique

(43) Veröffentlichungstag der Anmeldung: 07.05.2008
(73) Patentinhaber: Eberspächer catem GmbH & Co. KG, 76863 Herxheim bei Landau (DE)
(72) Erfinder: Zeyen, Michael, 76863 Herxheim-Hayna (DE); Clauss, Maurice, 67150 Nordhouse (FR); Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A1- 1 479 918
- DE-A1- 10 160 799
- DE-A1- 19 533 270
- DE-A1- 19 918 269
- DE-C1- 10 054 010
- US-B1- 6 178 764

## Beschreibung

Die vorliegende Erfindung betrifft ein Gebläsemodul für einen Fahrzeugsitz mit den Merkmalen des Hauptanspruchs. Des weiteren betrifft die vorliegende Erfindung einen Kraftfahrzeugsitz mit den Merkmalen des Anspruchs 10.

Derartige Gebläsemodule dienen der raschen und nahezu verzögerungsfreien Einstellung von angenehmen Klimabedingungen. Die Luft kann vom Gebläsemodul zu- oder abgeführt werden. Insbesondere bei offenen Fahrzeugen wie einem Cabriolet, einem Roadster und dergleichen, kann bei offener Fahrgastzelle ein räumlich um den Fahrzeugsitz und eine darauf platznehmende Person begrenztes Klima, insbesondere im Nackenbereich der Person, geschaffen werden.

Die wird z.B. in der De 100 54 010 gezeigt.

Dieses angenehme Klima kann durch im Betrieb des Gebläsemoduls entstehende Geräusche stark beeinträchtigt sein. Die DE 101 60 799 A1 schlägt daher vor, ein gattungsgemäßes Gebläsemodul nach oben hinter ein Kopfstützenpolster oder nach hinten auf die Rückseite einer Rückenlehne des Fahrzeugsitzes zu versetzen. Je nach Betriebszustand des Gebläsemoduls, beispielsweise bei hoher Luftfördermenge, treten deutlich hörbare Geräusche auf. Ein von der Geräuschquelle abgestrahltes Schallmuster wird vom Luftstrom quasi "übertragen". Dieses Schallmuster wird von einer auf dem Fahrzeugsitz platznehmenden Person besonders leicht wahrgenommen, wenn der Luftstrom in Richtung seines Ohres ausgerichtet ist.

Es ist daher eine Aufgabe der vorliegenden Erfindung, ein Gebläsemodul anzugeben, das die vorstehend genannten Geräusche vermindert und eine kostengünstige Herstellung für ein Serienprodukt ermöglicht.

Diese Aufgabe wird erfindungsgemäß mit den Merkmalen des Anspruchs 1 gelöst.

Eine weitere Aufgabe der vorliegenden Erfindung ist ein Kraftfahrzeugsitz anzugeben, der die im Betrieb auftretenden Geräusche reduziert.

Diese Aufgabe wird mit technisch einfachen Mitteln gemäß den in Anspruch 13 aufgeführten Merkmalen gelöst.

Von besonderer Bedeutung für die vorliegende Erfindung ist, dass eine von der Geräuschquelle des Gebläsemoduls ausgehende Schallwelle über die Schallaustrittsöffnung zumindest teilweise aus dem Kanal ausgekoppelt werden kann. Mittels des schalldämpfenden Materials wird die austretende Schallwelle quasi "geschluckt" bzw. ausgelöscht.

Die Schallwelle breitet sich von der Geräuschquelle kugelförmig in alle Raumrichtungen aus. Wird beim Betrieb des Gebläsemoduls die in Schwingungen versetzte Luft bewegt, können zudem Schallinterferenzen und Frequenzverschiebungen in den hörbaren Bereich auftreten. Die Schallwelle trifft wiederholt auf das Gehäuse und/oder den Kanal und versetzt diese selbst in Schwingungen wobei ein Teil reflektiert wird. Durch die quer zur Strömungsrichtung des Luftstroms angeordneten Schallaustrittsöffnung werden derartige Reflektionsphänomene erheblich reduziert. Hierzu ist die Schallaustrittsöffnung mit einem schalldämpfenden Material abdeckt.

Eine besonders effiziente Geräuschminderung ist erreichbar, wenn die Schallaustrittsöffnung möglichst nahe zur Geräuschquelle angeordnet sind. Es ist daher besonders vorteilhaft, die Schallaustrittsöffnung hinter der Luftfördereinrichtung am Gehäuse vorzusehen.

Die Formulierungen "hinter" bzw. "stromabwärts" und "vor" bzw. "stromaufwärts" werden in dieser Beschreibung in Hinblick auf die Strömungsrichtung des Luftstroms verwendet. Für den Fachmann ist offensichtlich, dass die Luftfördereinrichtung bidirektionale Luftströme erzeugen kann.

Als Geräuschquelle kommen bewegliche Bestandteile einer Luftfördereinrichtung, deren Antriebsmittel sowie den Luftstrom begrenzende und umleitende Mittel in Betracht. Letztere Mittel sind insbesondere mit dem den Luftstrom aufnehmenden Kanal verbunden. Im Kanal können in Abhängigkeit von der Temperatur und Strömungsgeschwindigkeit der Luft Turbolenzen entstehen. Diese als ein Rauschen wahrnehmbaren Turbolenzen treten des weiteren an Verjüngungen und Krümmungen des Kanals auf. Zur Verminderung derartiger Geräusche ist es daher vorteilhaft, die Schallaustrittsöffnung stromabwärts und nahe zur Schallquelle anzuordnen. Mündet der Kanal beim Saugbetrieb der Luftfördereinrichtung stromabwärts ins Fahrzeuginnere, so weist das Gehäuse entlang des Kanals beiderseits der Luftfördereinrichtung jeweils eine Schallaustrittsöffnung auf.

Die Bezeichnung Kanal umfasst in dieser Beschreibung sowohl einen lediglich vom Gebläsemodul ausgebildeten Kanal als auch ein mehrteiliges Kanalsystem mit einem an das Gehäuse anfügbaren separaten Kanalabschnitt. Der Kanalabschnitt kann beispielsweise eine vom Fahrzeugsitz bereitgestellte Ausnehmung sein.

Für ein besonders angenehmes Klima ist der Luftstrom beheizbar. Hierzu ist innerhalb des Kanals eine Heizeinrichtung vorgesehen. Diese Heizeinrichtung kann insbesondere mittels elektrischer Energie und regelbar betrieben werden, wobei der Luftstrom auf ein Strömungshindernis trifft bzw. daran vorbei strömt. Nach einer besonders vorteilhaften Weiterbildung der Erfindung ist es daher vorgesehen, die Schallaustrittsöffnung zwischen der Luftfördereinrichtung und der Heizeinrichtung bzw. hinter der Heizeinrichtung anzuordnen.

Ein moderner Fahrzeugsitz bietet eine Vielzahl von Einstellungsmöglichkeiten für eine Sitzpostion an. Der Kanal weist zur Positionierung seiner stromabwärts gelegenen Kanalmündung insbesondere flexible und/oder gekrümmte Abschnitte auf. Durch Längenänderung des Kanals und/oder bei Umlenkung des Luftstroms können wiederum Turbolenzen auftreten. Ist der Luftstrom auf bestimmte Körperpartien, wie Kopf-, Gesichts-, Rücken-, Schulterpartien, auszurichten, sind derartige Abschnitte nahe zur Kanalmündung angeordnet. Nach einer besonders vorteilhaften Ausführungsform der Erfindung ist die Schallaustrittsöffnung innerhalb dieses Abschnitts vorgesehen.

Des weiteren können Geräusche zwischen dem Gehäuse und den beweglichen Teilen der Luftfördereinrichtung erzeugt werden. Ist die Luftfördereinrichtung am Gebläsemodul festgelegt kann zudem das Gehäuse in Schwingungen versetzt werden. Zur Verminderung dieser Geräusche kann das Gebläsemodul derart weitergebildet sein, dass das Gehäuse in Form zweier korrespondierender Schalen mit U-förmigen Querschnitt ausgebildet ist, wobei die Schallaustrittsöffnung in einer Wandung der Schalen ausgespart ist. Die Wandung erstreckt sich in Gebrauchsstellung des Gebläsemoduls in etwa parallel zur Sitzfläche des Fahrzeugsitzes.

Durch die zweiteilige Ausgestaltung des Gehäuses kann die Geräuschentwicklung durch Resonanz mit den beweglichen Teilen auf eine Schale begrenzt werden. Dessen mit der Schallaustrittsöffnung versehene Wandung kann auf die Sitzfläche ausgerichtet werden, wobei ein Gewirke, das sich zwischen einem Obermaterial des Fahrzeugsitzes und dem Gebläsemodul erstreckt, als weiteres schalldämpfendes Material dienen kann.

Dieser Effekt kann mehrfach ausgenutzt werden. So ist ein Gebläsemodul nach einer vorteilhaften Weiterbildung der Erfindung derart gestaltet, dass in der Wandung der zweiten Schale eine weitere Schallaustrittsöffnung bereitgestellt ist, die der Schallaustrittsöffnung der ersten Schale gegenüberliegt. Ein schlanker Kanal kann auf den sich gegenüberliegenden Breitseiten der Schale die Schallaustrittsöffnungen aufweisen, welche in Gebrauchsstellung vom Schaum umfassenden Obermaterial eines Fahrzeugsitzes umgeben sind.

Um den Schall bei Auftreffen auf den Kanal in einem bestimmten Abschnitt nahezu vollständig auszukoppeln, sieht eine weitere vorteilhafte Ausführungsform des Gebläsemoduls vor, dass die Schallöffnung eine Vielzahl von Bohrungen umfasst. Hierdurch ergibt sich zudem der Vorteil, dass in Summe der Flächeninhalte der Bohrungen eine relativ große Aussparung für die Schallaustrittsöffnung geschaffen wird, wobei das Gehäuse bezüglich seiner Festigkeit und Steifigkeit kaum negativ beeinflusst ist.

Da sich der Schall innerhalb des Kanals konzentrisch von der Schallquelle ausbreitet, ist es bei einer vorteilhaften Weiterbildung der Erfindung vorgesehen, dass sich die Bohrungen im Wesentlichen über die gesamte Breite des Kanals erstrecken.

Als schalldämpfendes Material können alle in der Fachwelt bekannten eine Schallweiterleitung vermindernde Erzeugnisse benutzt werden. Diese Erzeugnisse umfassen beispielsweise Schäume mit geringer Rohdichte und Gebilde mit einer den Schall totalreflektierenden Oberfläche. Von besonderem Vorteil ist die Anwendung eines Schaumstoffs als schalldämmendes Material. Neben einem niedrigen Preis sind derartige Schaumstoffe flexibel, so dass eine vollständige Abdeckung der Schallaustrittsöffnung sichergestellt ist.

Eine für die Serienproduktion besonders kostengünstige Ausführungsform der Erfindung sieht vor, dass das mit der Schallaustrittsöffnung versehene Gehäuse umfänglich mit dem Schaumstoff umwickelt ist. Der Schaumstoff überstreicht hierbei mindestens den Gehäuseteil, auf dem die Schallöffnungen verteilt sind.

Als weiteres schalldämmendes Material sind Polsterungen eines Fahrzeugsitzes geeignet. Derartige Polsterungen beinhalten beispielsweise den Sitzkomfort verbessernde Schaumstoffe. Die Polsterung weist zur besseren Be- und Entlüftung mit Luft gefüllte Zwischenräume unregelmäßiger Gestalt auf. Diese Zwischenräume können die auftreffenden Schallwellen abschwächen. Eine weitere Ausführungsform des erfindungsgemäßen Gebläsemoduls ist daher so gestaltet, dass ein Teil des Fahrzeugsitzes eine Abdeckung aufweist, die mit dem Schaumstoff überzogen ist, der die Schallaustrittsöffnung abdeckt. Die Abdeckung kann zum Verschluss einer vorstehend beschriebenen Ausnehmung im Fahrzeugsitz dienen, die sowohl den Kanalabschnitt als auch eine das Gebläsemodul aufnehmende Höhlung bereitstellt. Somit ist es möglich, das erfindungsgemäße Gebläsemodul nachzurüsten, zu warten, zu reparieren oder nötigenfalls auszutauschen.

Das erfindungsgemäße Gebläsemodul kann als Nackenheizung bzw. Kopfbeheizung eingesetzt werden. Hierzu ist nach einer weiteren Ausführungsform der Erfindung das Gebläsemodul so weiter gebildet, dass es in eine Rückenlehne des Fahrzeugsitzes integrierbar ist und dessen Kanal innerhalb der Rückenlehne so ausrichtbar ist, dass der Kanal stromabwärts an der Oberkante des Fahrzeugsitzes in Richtung der Sitzfläche mündet.

Der Kraftfahrzeugsitz nach Anspruch 13 umfasst ein Gebläsemodul. Das Gebläsemodul kann zur Geräuschoptimierung entsprechend der vorstehend genannten Ausführungsformen ausgebildet sein. Der Kanal reicht bei diesem Fahrzeugsitz bis in den Nackenbereich, um darauf sitzende Personen bei beispielsweise offener Fahrgastzelle vor gesundheits und komfortbeeinträchtigenden Luftbewegungen zu schützen. Der aus dem Kanal austretende Luftstrom ist hierbei besonders gut hörbar. Zur Minimierung von im Betrieb erzeugten Geräuschen ist es vorgesehen, dass der Kanal und/oder das Gehäuse quer zur Luftströmung eine Schallaustrittsöffnung aufweist, die von einem schalldämpfenden Material abgedeckt ist.

Weitere Merkmale und Vorteile der Erfindung ergeben sich aus der folgenden Beschreibung mehrerer Ausführungsbeispiele sowie aus den Zeichnungen, auf die nachfolgend Bezug genommen wird. Es zeigen:
- Fig.1: ein erstes Ausführungsbeispiel eines erfindungsgemäßen Gebläsemoduls mit teilweise geschnittenem Gehäuse;
- Fig.2: eine Draufsicht eines zweiten Ausführungsbeispiels eines erfindungsgemäßen Gebläsemoduls;
- Fig.3: eine Draufsicht auf ein Gehäuseteil des zweiten Ausführungsbeispiels bei geöffnetem Gehäuse;
- Fig. 4: ein schematischer Längsschnitt eines ersten Beispiels eines Fahrzeugsitzes mit einem Ausführungsbeispiel eines erfindungsgemäßen Gebläsemoduls;
- Fig.4a: eine schematische Darstellung eines Querschnitts von einem erfindungsgemäßen Kraftfahrzeugsitz;
- Fig.5a: ein Sonogramm mit Messreihen verschiedener Gebläsemodule und des Stands der Technik; und
- Fig.5b: ein Diagramm mit Lautstärken über die Zeit von verschiedenen Gebläsemodulen und des Stands der Technik.

Sofern im Folgenden nichts anderes gesagt ist, gilt die folgende Beschreibung stets für alle Figuren und es beziehen sich gleiche Bezugszeichen stets auf dieselben konstruktiven Merkmale.

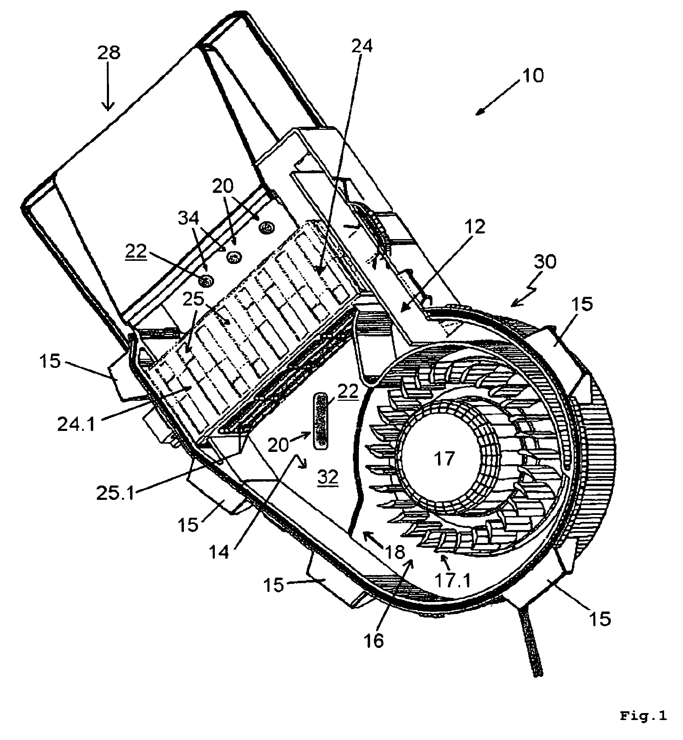

Ein in Fig.1 gezeigtes Gebläsemodul 10 dient der Klimatisierung eines hier nicht näher gezeigten Fahrzeugsitzes 100. Das Gebläsemodul 10 umfasst ein Gehäuse 12, das einen luftführenden Kanal 14 in Form eines rechteckigen Rohrs ausbildet. Der Kanal 14 ist in einen ersten Abschnitt und zweiten Abschnitt aufgeteilt, wobei der eine Luftfördereinrichtung 16 aufnehmende erste Abschnitt aus zwei Schalen 30 gebildet ist. Eine der Schalen 30 weist an dessen Außenseite Laschen 15 zum luftdichten Verschließen der sich entsprechenden Schalen 30 auf. Die Luftfördereinrichtung 16 umfasst einen drehbar gelagerten Rotor 17, der über eine Welle mit einem elektrisch betriebenen EC-Motor antreibbar ist. Je nach Drehrichtung des Rotors 17 kann bei Betrieb des Gebläsemoduls 10 ein Luftstrom 18 innerhalb des Kanals 14 bereitgestellt werden. Bei dem in Fig.1 gezeigten Ausführungsbeispiel strömt die Luft stromabwärts in den zweiten Abschnitt des Kanals 14, der in Form einer Tülle ausgebildet ist und sich zur Kanalmündung 28 hin verjüngt.

Beim Betrieb der Luftfördereinrichtung entstehen naturgemäß Schwingungen, die als Geräuschquelle auf eine den Kanal 14 durchströmende Luftsäule übertragbar sind. Weiterhin treten bei hoher Drehzahl des Rotors 17 Turbolenzen zwischen den Rotorblätter 17.1 und dem Gehäuse 12 auf. Deren Schallwellen pflanzen sich in alle Raumrichtungen fort und wird besonders vom Luftstrom 18 in Richtung Kanalmündung 28 transportiert. Weiterhin kann durch den Luftstrom 18 eine Frequenzverschiebung in den für das menschliche Ohr wahrnehmbaren Frequenzgang stattfinden, so dass auch Vibrationsschwingungen hörbar sind. Diese treten besonders bei Änderung der Drehzahl auf.

Die Schallwelle wird beim Durchlaufen des Kanals 14 mehrfach vom Gehäuse 12 und weiteren den Kanal 14 ausbildenden Kanalabschnitten, welche auch separat mit dem Gehäuse 12 verbindbar sind, reflektiert. Zur Verminderung der Schallwelle ist in eine Wandung 32 der Schale 30 eine Schallaustrittsöffnung 20 eingebracht. Die Schallaustrittsöffnung 20 erstreckt sich quer zum Luftstrom 18, wobei die Schallwelle den Kanal 14 verlassen kann, während durch den geringen Druckunterschied zwischen Kanalinnenraum und Umgebung nur geringste Anteile des Luftstroms 18 entweichen.

Diese Verluste werden zudem von einem die Schallaustrittsöffnung 20 abdeckenden schalldämpfenden Material 22 weiter reduziert. Hauptsächlich werden jedoch die Schallwellen vom schalldämpfenden Material 22 abgeschwächt. Hierzu genügt es, das das schalldämpfende Material 22 auf die Schallaustrittsöffnung 20 aufgelegt ist.

Zur Temperierung des Luftstroms 18 ist stromabwärts hinter der Luftfördereinrichtung 16 eine Heizeinrichtung 24 angeordnet. Die Heizeinrichtung 24 hält in einem Rahmen 24.1 eine Reihe von Widerstandsheizelementen 25, dessen zugeordnete Lamellen 25.1 vom Luftstrom 18 beaufschlagt sind. Der Luftstrom 18 staut sich insbesondere bei hoher Förderleistung der Luftfördereinrichtung 16 an den Lamellen 25.1 und versetzt die Lamellen 25.1 beim Anströmen in Schwingungen. Derartige Schwingungen breiten sich innerhalb des Kanals 14 in Form von Schallwellen zwischen der Luftfördereinrichtung 16 und der Heizeinrichtung 24 aus. Die sich quer zum Luftstrom 18 fortpflanzenden Schallwellen treffen auf die stromabwärts hinter der Luftfördereinrichtung und vor der Heizeinrichtung angeordnete Schallaustrittsöffnung 20 und treten aus dem Gehäuse 12 aus. Das schalldämpfende Material 22 verhindert eine weitere Ausbreitung der Schallwellen außerhalb des Gehäuses 12 sowie eine Schallreflektion in den Kanal 14.

Des weiteren kann beim Durchströmen der Heizeinrichtung 24, bei Austritt des Luftstroms 18 am stromabwärts gelegenen Ende der Lamellen 25.1 und durch Expansion der erwärmten Luft ein Rauschen oder ein Pfeifgeräusch auftreten. Bei dem in Fig.1 gezeigten Ausführungsbeispiel des Gebläsemoduls 10 ist daher eine weitere Schallaustrittsöffnung 20 stromabwärts der Heizeinrichtung 24 angeordnet. Die in Bezug auf den Luftstrom 18 hinter der Heizeinrichtung 24 vorgesehene Schallaustrittsöffnung 20 umfasst eine Vielzahl von Bohrungen 34, die von einem schalldämpfenden Material 22 abgedeckt sind.

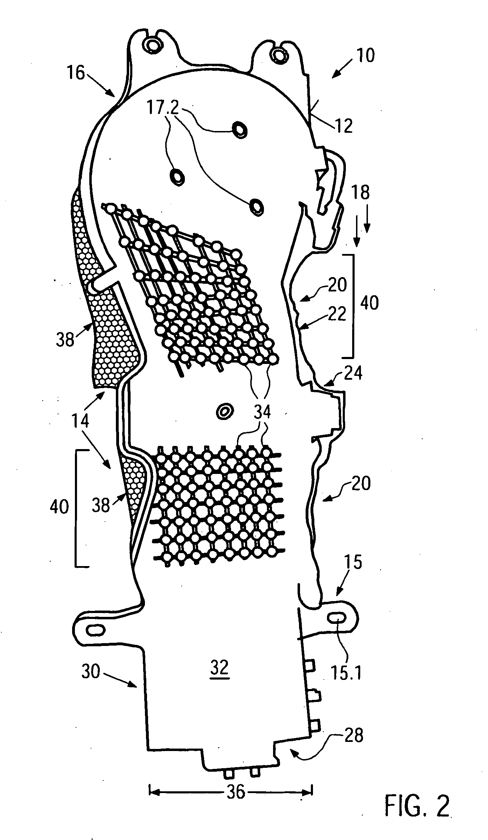

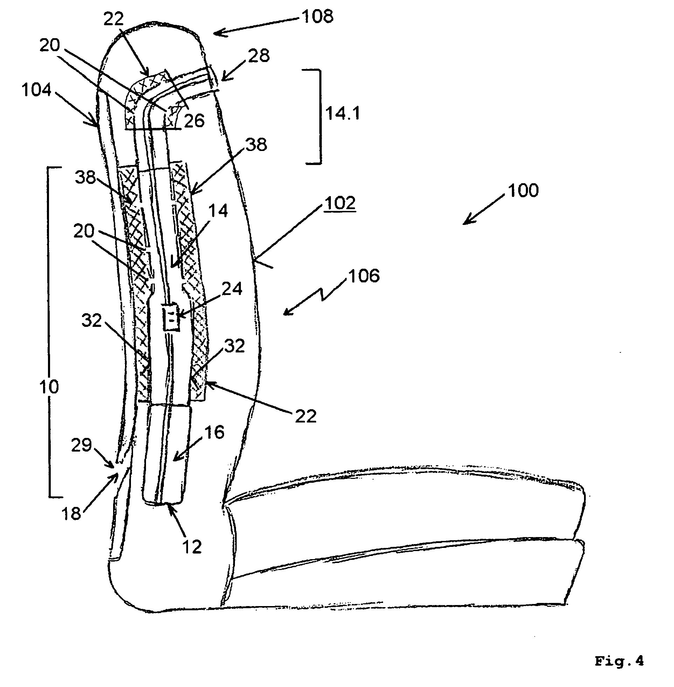

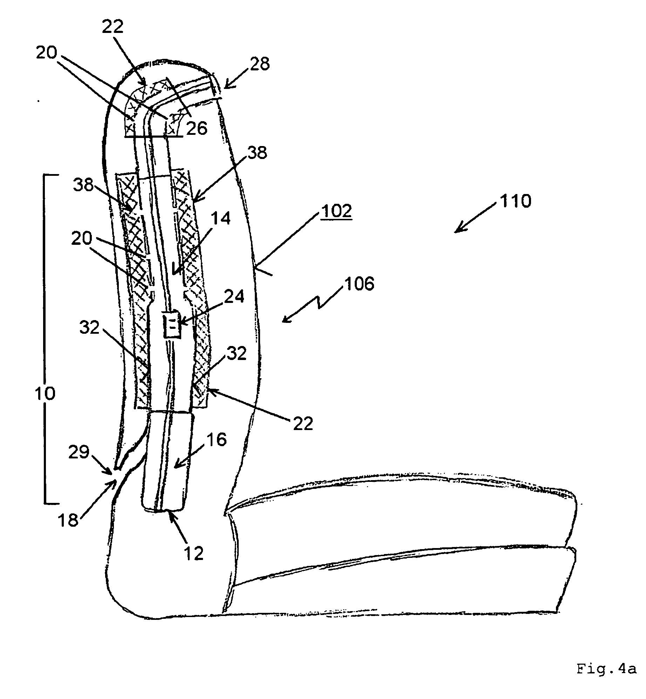

Das in Fig.2 gezeigte Ausführungsbeispiel eines erfindungsgemäßen Gebläsemoduls 10 mit einem Gehäuse 12 ist in Außenansicht dargestellt. Das Gehäuse 12 ist aus zwei im wesentlichen im Querschnitt U-förmigen, korrespondierenden Schalen 30 zusammengesetzt, wobei in der Draufsicht überwiegend die obere zur Rückenlehne weisende Schale 30 zu sehen ist. Die Schalen 30 nehmen eine Luftfördereinrichtung 16 und eine Heizeinrichtung 24 auf. Die Luftfördereinrichtung 16 ist mittels dreier Befestigungsmittel 17.2 an der Schale 30 festgelegt. In Gebrauchsstellung erzeugt innerhalb eines Kanals 14 die Luftfördereinrichtung 16 einen Luftstrom 18, der an einer stromabwärts angeordneten Kanalmündung 28 austritt. Sowohl zwischen der Luftfördereinrichtung 16 und der Heizeinrichtung 24, die ein hier nicht näher dargestelltes PTC umfasst, als auch zwischen der Kanalmündung 28 und dem PTC weist die Schale 30 eine Schallaustrittsöffnung 20 auf. Diese von einer Vielzahl von Bohrungen 34 definierten Schallaustrittsöffnungen 20 erstrecken sich über die gesamte Breite 36 des Kanals 14. Die Bohrungen 34 sind in mehreren Reihen in einer Wandung 32 der Schale 30 ausgespart. Wie insbesondere aus Fig.4 ersichtlich, kann das Gebläsemodul 10 bezüglich einer Sitzfläche 102 des Fahrzeugsitzes 100 so positioniert werden, dass die Wandung 32 in etwa parallel zur Sitzfläche 102 verläuft. An den Laschen 15, die seitlich an die Schale 30 angeformt sind, sind Langlöcher 15.1 bereitgestellt, um das Gebläsemodul 10 an einer nicht näher gezeigten Tragstruktur des Fahrzeugsitzes 100 zu befestigen.

Bei dem in Fig.2 gezeigten Gebläsemodul 10 sind die zwei Schalen 30 unter Aussparung der Heizeinrichtung 24 von einem schalldämpfenden Material 22 umwickelt. Von den Befestigungsmitteln 17.2 der Luftfördereinrichtung 16 auf das Gehäuse 12 übertragene Schwingungen werden hierdurch gedämpft. Das schalldämpfende Material 22 umfasst einen Schaumstoff 38. Dieser Schaumstoff 38 ist in Form eines flexiblen Tuchs ausgebildet, das mindestens den Bereich 40 um die Schallaustrittsöffnungen 20 abdeckt, wobei es um das Gehäuse 12 herum gewickelt wird. Zum Zwecke eines besseren Darstellens ist der Schaumstoff 38 in Fig.2 von der Oberseite des Gehäuses 12 entfernt.

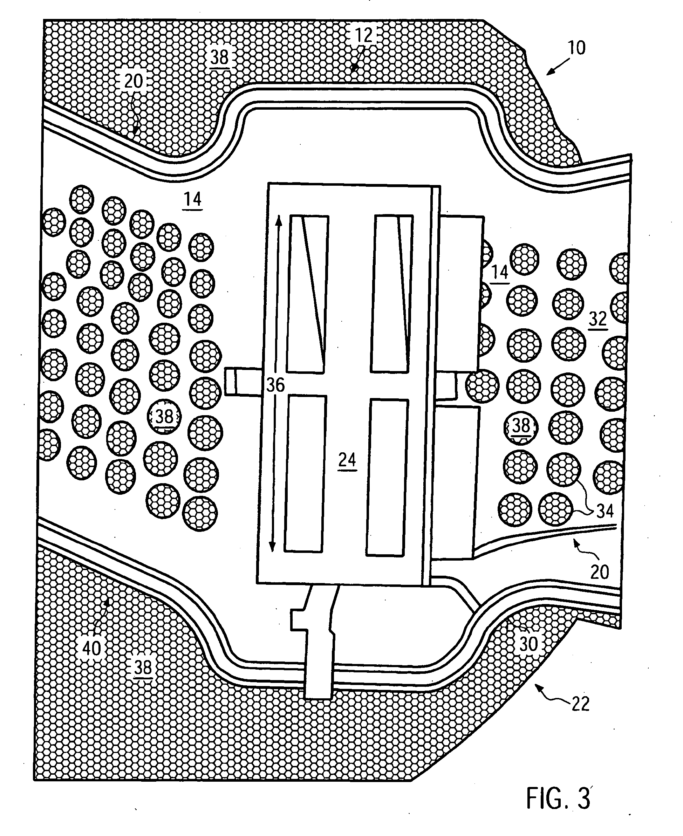

Fig.3 zeigt den mittleren Teil des zuvor dargestellten Ausführungsbeispiels eines Gebläsemoduls 10, wobei der Einfachheit halber eine den Kanal 14 abdeckende Schale 30 fehlt. Die hier gezeigte erste Schale 30 des Gehäuses 12 weist einen im Wesentlichen U-förmigen Querschnitt auf, der in Gebrauchsstellung einen luftführenden Kanal 14 rohrartig begrenzt. Der Kanal 14 ist innerhalb des Gehäuses 12 durch die Heizeinrichtung 24 geteilt. Ein zur Heizeinrichtung 24 ausgerichteter Luftstrom 18 wird beim Durchströmen der Heizeinrichtung 24 aufgeheizt. Im Bereich des Gehäuses 12, der die Heizeinrichtung 24 aufnimmt, verbreitert sich der Kanal 14. Durch Änderung des Querschnitts des Kanals 14 treten Strömungswirbel und Turbolenzen auf, deren Schallwellen sich in alle Raumrichtungen ausbreiten. Zur Abschwächung dieser Schallwellen ist jeweils eine Schallaustrittsöffnung 20 beiderseits der Heizeinrichtung 24 in eine Wandung 32 der Schale 30 angeordnet. Die hier gezeigte Schale 30 des Gehäuses 12 ist von einem schalldämpfenden Material 22 unterlegt und überstreicht den Bereich 40 um die Schallaustrittsöffnungen 20. Die Schallaustrittsöffnungen 20 sind von einer Reihe von Bohrungen 34 gebildet, die von einem Schaumstoff 38 des schalldämpfenden Materials 22 abdeckt sind. Die im Betrieb erzeugten Schallwellen erreichen über die Schallaustrittsöffnungen 20 den Schaumstoff 38. Der Schaumstoff 38 umfasst mehrere dessen Rohdichte verringernde Zwischenräume auf, wobei mittels Totalreflektion des Schalls eine Geräuschverringerung erzielt wird.

Fig. 4 zeigt einen Fahrzeugsitz 100, in dessen Rückenlehne 106 ein erfindungsgemäßes Gebläsemodul 10 integriert ist. Ein zumindest teilweise vom Gehäuse 12 ausgebildeter luftführender Kanal 14 ist hierbei so angeordnet, dass seine stromabwärts gelegene Kanalmündung 28 nahe zur Oberkante 108 des Fahrzeugsitzes 100 endet. Das andere Ende des Kanals 14 mündet in einer Abdeckung 104 der Rückenlehne 106. Während des Betriebs wird mittels der Luftfördereinrichtung 16, die im Gehäuse 12 des Gebläsemoduls 10 angeordnet ist, ein Luftstrom 18 über die Lufteintrittsöffnung 29 in den Kanal 14 angesaugt und von einer Heizeinrichtung 24 aufgeheizt, die vom Luftstrom 18 beaufschlagt ist. Hierbei auftretende Geräusche werden entlang des Kanals 14 vom Luftstrom 18 und dem Schallwellen reflektierenden Gehäuse 12 bis zur Kanalmündung 28 transportiert. Über die quer zum Luftstrom 18 im Gehäuse 12 bzw. dem Kanal 14 eingebrachte Schallaustrittsöffnungen 20 werden die Schallwellen ausgekoppelt. Der im Querschnitt dargestellte Kanal 14 weist zwei sich gegenüberliegende Wandungen 32 auf, die in etwa parallel zur Sitzfläche 102 bzw. zur rückseitigen Abdeckung 104 verlaufen. Zwischen der Sitzfläche 102 und der zur Sitzfläche 102 weisenden Wandung 32 ist ein Schaumstoff 38 vorgesehen, der als schalldämpfendes Material 22 dient, da der Schaumstoff 38 die Schallaustrittsöffnungen 20 abdeckt. Die Abdeckung 104 ist mit Schaumstoff 38 belegt. Dieser insbesondere leicht verformbare Schaumstoff 38 erstreckt sich zumindest im Bereich 40 des Gehäuses 12 und des Kanals 14, die ebenfalls von Schallaustrittsöffnungen 20 durchbrochen sind. Der über diese Schallaustrittsöffnungen 20 austretende Schall wird vom Schaumstoff 38 der Abdeckung 104 quasi "geschluckt".

Der Kanal 14 ist, wie in Fig.4 gezeigt, sowohl von dem Gehäuse 12 als auch von einem separaten Kanalabschnitt 14.1 gebildet. Der Kanalabschnitt 14.1 umfasst einen Bogen 26 nahe zur Kanalmündung 28, um den Luftstrom 18 von der Sitzfläche 102 weg weisend in Richtung auf eine hier nicht gezeigte und auf dem Fahrzeugsitz 100 sitzende Person auszurichten. Bei Ablenkung des Luftstroms 18 innerhalb des Bogens 26 entstehen naturgemäß Turbolenzen, die insbesondere bei an der Oberkante 108 austretendem Luftstrom 18 gut hörbare Geräusche hervorrufen. Innerhalb des Bogens 26 ist eine weitere Schallaustrittsöffnung 20 angeordnet, wobei hierin auftretende Schallwellen von einem die Schallaustrittsöffnung 20 abdeckenden schalldämpfenden Material 22 abschwächt sind.

Fig. 4A zeigt einen Kraftfahrzeugsitz 110 mit einem Gebläsemodul 10, das in die Rückenlehne 106 integriert ist. Das Gebläsemodul 10 bildet einen rohrförmigen Kanal 14 aus, der sich bis zum Nackenbereich einer darauf platznehmenden Person erstreckt. Das Gehäuse 12 nimmt eine Luftfördereinrichtung 16 auf, die in Gebrauchsstellung einen Luftstrom 18 innerhalb des Kanals 14 bereitstellt. Des weiteren ist innerhalb des Kanals 14 eine vom Gehäuse 12 festgelegte Heizeinrichtung 24 vorgesehen. Weiter stromabwärts ist hinter der Luftfördereinrichtung 16 und der Heizeinrichtung 24 und nahe zur Kanalmündung 28 ein Bogen 26 von dem Kanal 14 ausgebildet, der mit einer Schallaustrittsöffnung 20 versehen ist, die in etwa quer zum Luftstrom 18 d.h. in Längserstreckung des Gehäuses 12 verläuft. Der hierüber austretende Schall wird von einem die Schallaustrittsöffnung 20 abdeckenden Material 22 aufgehalten. Ein teleskopartig ausgebildeter Verschiebebereich des Kanals 14 ermöglicht eine veränderliche Positionierung der Kanalmündung 28, welcher ebenfalls von mit dem schalldämpfenden Material 22 abdeckten Schallaustrittsöffnungen 20 durchbrochen ist. Das Gehäuse 12 ist teilweise von zwei sich gegenüberliegenden Wandungen 32 begrenzt, die sich im Wesentlichen parallel zur Sitzfläche 102 erstrecken. Diese Wandungen 32 sind von Schallaustrittsöffnungen 20 durchbrochen, die quer zum Luftstrom 18 ausgerichtet sind. Die Schallaustrittsöffnungen 20 erstrecken sich sowohl zwischen der Luftfördereinrichtung 16 und der Heizeinrichtung 24 als auch stromabwärts der Heizeinrichtung 24. Zur weiteren Schallabschwächung sind diese Schallaustrittsöffnungen 20 des Gehäuses 12 von einem Schaumstoff 38 als schalldämpfenden Material 22 überdeckt.

Weitere Merkmale des Gebläsemoduls 10 des Kraftfahrzeugsitzes 110 sind in den vorstehend genannten Ausführungsbeispielen erläutert.

### Beispiele

Zu Vergleichszwecken sind verschiedene Gebläsemodule auf ihre Geräuschentwicklung im Betrieb untersucht worden. Hierbei wurden nachfolgend beschriebene Ausführungen von Gebläsemodulen zur Aufnahme von Messreihen verwendet.
1. Ein Gebläsemodul nach dem Stand der Technik für einen Fahrzeugsitz mit einem Gehäuse, das zumindest einen Teil eines luftführenden Kanals ausbildet und eine Luftfördereinrichtung aufnimmt, welche in Gebrauchsstellung einen Luftstrom innerhalb des Kanals bereitstellt.
2. Ein Gebläsemodul A mit den vorstehend genannten Merkmalen, wobei das Gehäuse eine Heizeinrichtung aufnimmt, die vom Luftstrom beaufschlagt ist, und wobei zwischen der Luftfördereinrichtung und der Heizeinrichtung, sowie quer zur Strömungsrichtung des Luftstroms eine Schallaustrittsöffnung im Gehäuse ausgespart ist, die von einem schalldämpfenden Material abdeckt ist.
3. Ein Gebläsemodul B mit den Merkmalen des Gebläsemoduls A, wobei eine weitere mit schalldämpfendem Material abgedeckte Schallaustrittsöffnung stromabwärts der Heizeinrichtung angeordnet ist.
4. in Gebläsemodul C mit den Merkmalen des Gebläsemoduls B, wobei eine zusätzliche Schallaustrittsöffnung innerhalb eines nahe zur Kanalmündung ausgebildeten Bogens bereitgestellt ist, die ebenfalls von einem schalldämpfenden Material abdeckt ist.

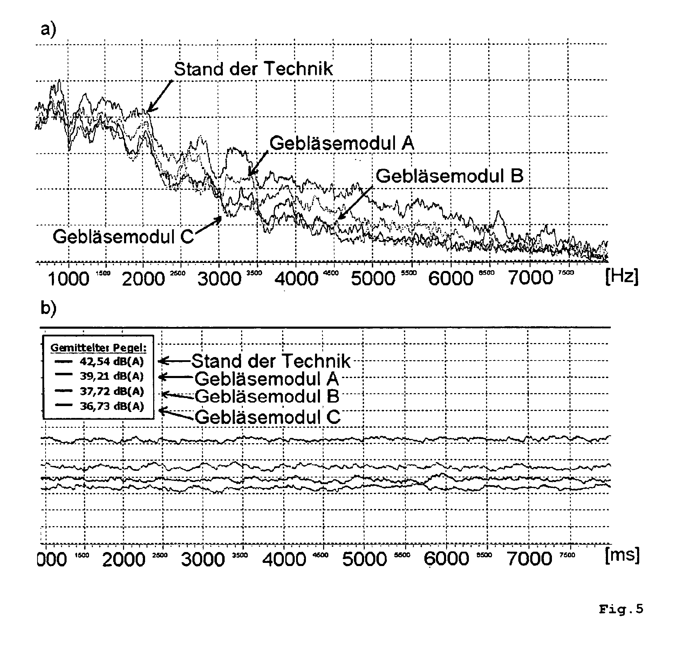

Die Ergebnisse dieser vergleichenden Messreihen sind in Fig.5a in Form eines Sonogramms als Lautstärke über die Frequenz aufgetragen.

In Fig. 5b ist die Lautstärke über die Zeit der vorstehend genannten Ausführungen von verschiedenen Gebläsemodulen aufgezeigt.

Aus den Graphen der Vergleichsmessungen ergibt sich deutlich, dass die Maxima des Lautstärkepegels im Frequenzbereich unterhalb 1000 Hz, zwischen 2500 Hz und 3000 Hz und von 3000 Hz bis etwa 3500 Hz des mit "Stand der Technik" bezeichneten Gebläsemoduls durch die zusätzlichen Merkmale der Gebläsemodule A bis C herabgesetzt sind (Fig. 5a).

Der mittlere Geräuschpegel ist im Vergleich zum Gebläsemodul nach dem Stand der Technik durch die zusätzlichen Merkmale der vorstehend beschriebenen Gebläsemodule jeweils absenkt (Fig. 5b).

Die vorliegende Erfindung offenbart ein Gebläsemodul und einen Kraftfahrzeugsitz mit Geräuschisolierung, die mit technisch einfachen Mitteln eine effektive Verminderung von Betriebsgeräuschen erzielt und dank ihrer technischen Ausgestaltung eine kostengünstige Serienproduktion ermöglicht.

### Bezugszeichenliste

- 10: Gebläsemodul
- 12: Gehäuse
- 14: Kanal
- 14.1: Kanalabschnitt
- 15: Laschen
- 15.1: Langloch
- 16: Luftfördereinrichtung
- 17: Rotor
- 17.1: Rotorblatt
- 17.2: Befestigungsmittel
- 18: Luftstrom
- 20: Schallaustrittsöffnung
- 22: schalldämpfendes Material
- 24: Heizeinrichtung
- 24.1: Rahmen
- 25: Widerstandsheizelement
- 25.1: Lamelle
- 26: Bogen
- 28: Kanalmündung
- 29: Lufteintrittsöffnung
- 30: Schale
- 32: Wandung
- 34: Bohrungen
- 36: Breite des Kanals
- 38: Schaumstoff
- 40: Bereich
- 100: Fahrzeugsitz
- 102: Sitzfläche
- 104: Abdeckung
- 106: Rückenlehne
- 108: Oberkante
- 110: Kraftfahrzeugsitz

## Patentansprüche

1. Fahrzeugsitz-Gebläsemodul (10) für einen Fahrzeugsitz (100) mit einem Gehäuse (12), das zumindest einen Teil eines luftführenden Kanals (14) ausbildet und eine Luftfördereinrichtung (16) aufnimmt, welche in Gebrauchsstellung einen Luftstrom (18) innerhalb des Kanals (14) bereitstellt, wobei das Gebläsemodul (10) in eine Rückenlehne (106) des Fahrzeugsitzes (100) integrierbar ist, wobei sich der Kanal (14) bis in einen Bereich seiner Oberkante (108) erstreckt,
**dadurch gekennzeichnet, dass**
das Gehäuse (12) und/oder der Kanal (14) in Strömungsrichtung des Luftstroms (18) stromabwärts hinter der Luftfördereinrichtung (16) und stromabwärts einer innerhalb des Kanals (14) angeordneten Heizeinrichtung (24) und quer zur Strömungsrichtung des Luftstroms (18) mehrere Schallaustrittsöffnungen (20) aufweist, die von einem schalldämpfenden Material (22) abgedeckt sind wobei die mehreren Schallaustrittsöffnungen (20) an sich gegenüberliegenden, sich parallel zu der Rückenlehne (106) des Fahrzeugsitzes (100) erstreckenden Wandungen (32) des Gehäuses (12) ausgespart sind.

2. Gebläsemodul (10) nach Anspruch 1, **dadurch gekennzeichnet, dass** die Schallaustrittsöffnung (20) ferner zwischen der Luftfördereinrichtung (16) und einer innerhalb des Kanals (14) angeordneten Heizeinrichtung (24) vorgesehen ist, die vom Luftstrom (18) beaufschlagbar ist.

3. Gebläsemodul (10) nach einem der Ansprüche 1 oder 2, **dadurch gekennzeichnet, dass** die Schallaustrittsöffnung (20) ferner innerhalb eines Bogens (26) des Kanals (14) nahe zur Kanalmündung (28) angeordnet ist.

4. Gebläsemodul (10) nach einem der Ansprüche 1 bis 3, **dadurch gekennzeichnet, dass** das Gehäuse (12) zwei im wesentlichen im Querschnitt U-förmige, korrespondierende Schalen (30) umfasst, die die Luftfördereinrichtung (16) und die Heizeinrichtung (24) in sich aufnehmen.

5. Gebläsemodul (10) nach einem der Ansprüche 1 bis 4, **dadurch gekennzeichnet, dass** die Schallaustrittsöffnung (20) von einer Vielzahl von Bohrungen (34) gebildet ist.

6. Gebläsemodul (10) nach Anspruch 5, **dadurch gekennzeichnet, dass** die Bohrungen (34) in etwa über die gesamte Breite (36) des Kanals (14) verteilt sind.

7. Gebläsemodul (10) nach einem der Ansprüche 1 bis 6, **dadurch gekennzeichnet, dass** das schalldämpfende Material (22) aus einem Schaumstoff (38) hergestellt ist.

8. Gebläsemodul (10) nach Anspruch 7, **dadurch gekennzeichnet, dass** das Gehäuse (12) jedenfalls im Bereich (40) der Schallaustrittsöffnung (20) mit dem Schaustoff (38) umfänglich umwickelt ist.

9. Gebläsemodul (10) nach Anspruch 7 oder 8, **dadurch gekennzeichnet, dass** der Schaumstoff (38) einen Teil einer Abdeckung (104) des Fahrzeugsitzes (100) bildet.

10. Kraftfahrzeugsitz (110) mit einem Gebläsemodul (10), insbesondere nach einem der Ansprüche 1 bis 9, mit einem Gehäuse (12), das zumindest einen Teil eines sich bis zum Nackenbereich erstreckenden luftführenden Kanals (14) ausbildet und eine Luftfördereinrichtung (16) aufnimmt, welche in Gebrauchsstellung einen Luftstrom (18) innerhalb des Kanals (14) bereitstellt, wobei das Gebläsemodul (10) in eine Rückenlehne (106) des Fahrzeugsitzes (100) integrierbar ist, wobei sich der Kanal (14) bis in einen Bereich seiner Oberkante (108) erstreckt
**dadurch gekennzeichnet, dass**
das Gehäuse (12) und/oder der Kanal (14) in Strömungsrichtung des Luftstroms (18) stromabwärts hinter der Luftfördereinrichtung (16) und stromabwärts einer innerhalb des Kanals (14) angeordneten Heizeinrichtung (24) und quer zur Strömungsrichtung des Luftstroms (18) mehrere Schallaustrittsöffnungen (20) aufweist, die von einem schalldämpfenden Material (22) abgedeckt sind, wobei die mehreren Schallaustrittsöffnungen (20) an sich gegenüberliegenden, sich parallel zu der Rückenlehne (106) des Fahrzeugsitzes (100) erstreckenden Wandungen (32) des Gehäuses (12) ausgespart sind.

## Claims

1. Vehicle-seat fan module (10) for a vehicle seat (100), comprising a housing (12) which defines at least one portion of an air-conducting duct (14) and accommodates an air conveyor (16) providing, in a position of use, an airflow (18) inside the duct (14), wherein the fan module (10) can be integrated into a seat back (106) of the vehicle seat (100), wherein the duct (14) extends to an area of the upper edge (108) thereof,
**characterized in that**
the housing (12) and/or the duct (14) comprises a plurality of sound outlet openings (20) in the flow direction of the airflow (18) downstream behind the air conveyor (16) and downstream of a heater (24) arranged inside the duct (14), and transversely with respect to the flow direction of the airflow (18), which are covered by a sound-absorbing material (22), wherein the plurality of sound outlet openings (20) are recessed on opposing walls (32) of the housing (12) which extend in parallel with the seat back (106) of the vehicle seat (100).

2. Fan module (10) according to claim 1, **characterized in that** the sound outlet opening (20) is further provided between the air conveyor (16) and a heater (24) arranged inside the duct (14), to which the airflow (18) can be supplied.

3. Fan module (10) according to any one of claims 1 or 2, **characterized in that** the sound outlet opening (20) is further arranged inside an arch (26) of the duct (14) close to the duct outlet (28).

4. Fan module (10) according to any one of claims 1 to 3 , **characterized in that** the housing (12) comprises two corresponding shells (30) having a substantially U-shaped cross section which accommodate the air conveyor (16) and the heater (24).

5. Fan module (10) according to any one of claims 1 to 4, **characterized in that** the sound outlet opening (20) is defined by a plurality of bores (34).

6. Fan module (10) according to claim 5, **characterized in that** the bores (34) are distributed approximately over the entire width (36) of the duct (14).

7. Fan module (10) according to any one of claims 1 to 6, **characterized in that** the sound-absorbing material (22) is made of a foamed material (38).

8. Fan module (10) according to claim 7, **characterized in that** the housing (12) is wrapped with the foamed material (38) around its circumference at any rate in the area (40) of the sound outlet opening (20).

9. Fan module (10) according to claim 7 or 8, **characterized in that** the foamed material (38) forms a part of a cover (104) of the vehicle seat (100).

10. Motor vehicle seat (110) comprising a fan module (10), particularly according to claims 1 to 9, comprising a housing (12) which defines at least one portion of an air-conducting duct (14) extending to the neck region and accommodates an air conveyor (16) providing, in a position of use, an airflow (18) inside the duct (14), wherein the fan module (10) can be integrated into a seat back (106) of the vehicle seat (100), wherein the duct (14) extends to an area of the upper edge (108) thereof,
**characterized in that**
the housing (12) and/or the duct (14) comprises a plurality of sound outlet openings (20) in the flow direction of the airflow (18) downstream behind the air conveyor (16) and downstream of a heater (24) arranged inside the duct (14), and transversely with respect to the flow direction of the airflow (18), which are covered by a sound-absorbing material (22), wherein the plurality of sound outlet openings (20) are recessed on opposing walls (32) of the housing (12) which extend in parallel with the seat back (106) of the vehicle seat (100).

## Revendications

1. Module de ventilateur (10) pour un siège de véhicule (100), comportant un boîtier (12), qui forme au moins une partie d'un conduit (14) de circulation d'air et loge un dispositif de refoulement d'air (16) qui, dans la position de service, met à disposition un flux d'air (18) à l'intérieur du conduit (14), le module de ventilateur (10) pouvant être intégré dans un dossier (106) du siège de véhicule (100), le conduit (14) menant jusqu'à une zone du bord supérieur (108) de ce dernier,
**caractérisé en ce que**
le boîtier (12) et/ou le conduit (14) comportent une pluralité d'ouvertures de diffusion sonore (20), qui sont disposées, selon la direction d'écoulement du flux d'air (18) en aval derrière le dispositif de refoulement d'air (16) et en aval d'un dispositif de chauffage (24), monté à l'intérieur du conduit (14), et transversalement à la direction d'écoulement du flux d'air (18), et qui sont masquées par un matériau insonorisant (22), la pluralité d'ouvertures de diffusion sonore (20) étant ménagées dans des parois (32) du boîtier (12) situées face à face et orientées parallèlement au dossier (106) du siège de véhicule (100).

2. Module de ventilateur (10) selon la revendication 1, **caractérisé en ce que** l'ouverture de diffusion sonore (20) est prévue en outre entre le dispositif de refoulement d'air (16) et un dispositif de chauffage (24) monté à l'intérieur du conduit (14), et qui peut être alimentée par le flux d'air (18).

3. Module de ventilateur (10) selon la revendication 1 ou 2, **caractérisé en ce que** l'ouverture de diffusion sonore (20) est disposée en outre à l'intérieur d'une courbe (26) du conduit (14) à proximité de l'embouchure (28) du conduit.

4. Module de ventilateur (10) selon l'une quelconque des revendications 1 à 3, **caractérisé en ce que** le boîtier (12) comporte deux coques (30) correspondantes, qui ont une section sensiblement en forme de U et qui logent le dispositif de refoulement d'air (16) et le dispositif de chauffage (24).

5. Module de ventilateur (10) selon l'une quelconque des revendications 1 à 4, **caractérisé en ce que** l'ouverture de diffusion sonore (20) est formée par une pluralité de trous de perçage (34).

6. Module de ventilateur (10) selon la revendication 5, **caractérisé en ce que** les trous de perçage (34) sont réparties à peu près sur toute la largeur (36) du conduit (14).

7. Module de ventilateur (10) selon l'une quelconque des revendications 1 à 6, **caractérisé en ce que** le matériau insonorisant (22) est réalisé en mousse (38).

8. Module de ventilateur (10) selon la revendication 7, **caractérisé en ce que** le boîtier (12) est entouré par la mousse (38) sur son pourtour, en tout cas dans la zone (40) de l'ouverture de diffusion sonore (20).

9. Module de ventilateur (10) selon la revendication 7 ou 8, **caractérisé en ce que** la mousse (38) forme une partie d'un habillage (104) du siège de véhicule (100).

10. Siège de véhicule (110) comportant un module de ventilateur (10), en particulier selon l'une quelconque des revendications 1 à 9, avec un boîtier (12), qui forme au moins une partie d'un conduit (14) de circulation d'air, s'étendant jusque dans la zone de la nuque, et loge un dispositif de refoulement d'air (16) qui, dans la position de service, met à disposition un flux d'air (18) à l'intérieur du conduit (14), le module de ventilateur (10) pouvant être intégré dans un dossier (106) du siège de véhicule (100), le conduit (14) menant jusqu'à une zone du bord supérieur (108) de ce dernier,
**caractérisé en ce que**
le boîtier (12) et/ou le conduit (14) comportent une pluralité d'ouvertures de diffusion sonore (20), qui sont disposées, selon la direction d'écoulement du flux d'air (18), en aval derrière le dispositif de refoulement d'air (16) et en aval d'un dispositif de chauffage (24), monté à l'intérieur du conduit (14), et transversalement à la direction d'écoulement du flux d'air (18), et qui sont masquées par un matériau insonorisant (22), la pluralité d'ouvertures de diffusion sonore (20) étant ménagées dans des parois (32) du boîtier (12) situées face à face et orientées parallèlement au dossier (106) du siège de véhicule (100).
